# EUROPÄISCHE PATENTSCHRIFT

(11) **EP 2 203 682 B1**
(45) Veröffentlichungstag und Bekanntmachung des Hinweises auf die Patenterteilung: **04.04.2018**
(21) Anmeldenummer: 08804351.8
(22) Anmeldetag: 18.09.2008
(51) Int. Cl.: F23R 3/00

(54) **GASTURBINE MIT GESCHWEISSTEN BRENNKAMMERSCHALEN**
GAS TURBINE WITH WELDED COMBUSTOR SHELL
TURBINE À GAZ AVEC SEGMENTS DE CHEMISE SOUDÉS

(30) Priorität: 24.09.2007 EP 07117070
(43) Veröffentlichungstag der Anmeldung: 07.07.2010
(73) Patentinhaber: General Electric Technology GmbH, 5400 Baden (CH)
(72) Erfinder: TSCHUOR, Remigi, CH-5210 Windisch (CH); HÄHNLE, Hartmut, 79790 Küssaberg (DE); SCHNEIDER, Lothar, CH-5417 Untersiggenthal (CH); MARKOVIC, Alen, 47000 Karlovac (HR)
(74) Vertreter: Lee, Brenda
(86) Internationale Anmeldenummer: PCT/EP2008/062407
(87) Internationale Veröffentlichungsnummer: WO 2009/040286

(56) Entgegenhaltungen:
- EP-A- 1 267 127
- EP-A- 1 426 687
- EP-A- 1 813 867
- DE-A1- 10 116 452
- DE-A1-102006 011 248
- DE-A1-102007 001 835
- GB-A- 2 131 540
- JP-A- 2002 295 268
- US-A1- 2004 020 212

## Beschreibung

### Technisches Gebiet

Die Erfindung betrifft eine Gasturbine mit ringförmigen Innen- und Aussenschalen einer Ringbrennkammer, den Verschluss der Schalensegmente sowie ein Verfahren zur Reparatur dieses Verschlusses.

### Stand der Technik

Für das Design von Gasturbinenbrennkammern gibt es grundsätzlich mehrere verschiedene Ansätze. Einer davon ist die Verwendung von Ringbrennkammern, auf die sich die vorliegende Erfindung bezieht. Dies sind ringförmige Brennkammern, die zwischen Verdichter und Turbine im wesentlichen rotationssymmetrisch um den Rotor der Gasturbine angeordnet sind. Über mindestens einen Brenner wird ein brennbares Gasgemisch in die Ringbrennkammer eingeleitet, das in dieser verbrennt und als ringförmiger Strom in die Turbine strömt. Der im wesentlichen ringförmige Raum wird nach innen, dass heisst zur Rotorseite durch eine sogenannte Innenschale begrenzt und nach aussen durch eine sogenannte Aussenschale begrenzt. Aufgrund der hohen Temperaturen und der Wärmeentwicklung in der Brennkammer sind die Schalen hohen thermischen Belastungen ausgesetzt. Um trotz der hohen Wärmebelastung eine ausreichende Lebensdauer sicher zu stellen, sind Ringbrennkammern mit verschiedenen Kühlmethoden entwickelt worden, die ausserdem meist mit Wärmeschutzschichten oder Schutzschildern kombiniert werden.

In der EP1312865 wird eine Ringbrennkammer vorgeschlagen, die aus Schalen aufgebaut ist und deren Schalen über flanschartige Anschlussbereiche miteinander verbunden sind. Die DE102007001835 beschreibt eine Ummantelung für eine Gasturbinenbrennkammer, die au zwei miteinander verschweißten Abschnitten besteht. Mit Flanschen verbundene Schalen oder Halbschalen haben inhärent das Problem, dass sich die Bereiche der Teilfugen thermisch anders verhalten als die freien Schalenbereiche ohne Flansch und damit die thermischen Ausdehnungen anders verlaufen als im freien Wandbereich. Dies kann besonders bei dünnwandigen Schalen zu einem Verzug führen. Ein Verzug der Schalen kann die Höhe der Kühlkanäle, die sich auf der dem Heissgas abgewandten Seite der Schale befinden, verändern und damit die Kühlluftführung und Kühleffektivität beeinflussen. Ausserdem kann der Verzug zu Spannungen, Rissbildung oder mechanischem Versagen der Teile führen.

Trotz der Kühlung und der Wärmeschutzschichten sind die der Brennkammerinnenseite zugewandten Wände der Brennkammer lebensdauerkritische Teile. Um bei Schäden an diesen kritischen Teilen nicht die gesamten Teile austauschen zu müssen sind verschiedene Reparaturverfahren entwickelt worden. In der EP1267127 werden Reparaturverfahren zum Austausch von Brennkammersegmenten insbesondere von Schalen beschrieben. Dabei wird das Ausschneiden von Teilstücken der Brennkammerwände und deren Ersatz sowie das Einschweissen von Ersatzstücken beschrieben.

Ein Nachteil bei Schweissreparaturen sind die in der Regel reduzierten Materialeigenschaften im Bereich der Schweissnaht. Dazu kommt die Problematik hochwertige Wärmeschutzschichten auf eine Schweissnaht aufzubringen. Dies gilt insbesondere für Reparaturen, die vor Ort, dass heisst im Kraftwerk ohne gute Zugänglichkeit der Bauteile und ohne optimale Randbedingungen für das Aufbringen der Schutzschichten, durchgeführt werden. Dies führt dazu, dass Schweissnähte nach erfolgter Reparatur ein Schwachpunkt im weiteren Betrieb der Gasturbine bilden und oft nicht mehr die gewünschte Lebensdauer erreichen. Ausserdem führt das Aufbringen einer hochwertigen dauerhaften Wärmeschutzschicht (Thermal Barrier Coating TBC) zu hohen Zusatzkosten und Zeitverzögerungen bei der Reparatur.

### Darstellung der Erfindung

Der vorliegenden Erfindung ist die Aufgabe gestellt, eine Ringbrennkammer zu schaffen, die thermisch verzugsarm erwärmt werden kann, sich verzugsarm ausdehnt und zuverlässig geschlossen ist. Ausserdem sind Verfahren zu schaffen, mit denen die Ringbrennkammer ohne Lebensdauereinbussen für Reparaturen geöffnet und wieder geschlossen werden kann sowie rekonditioniert werden kann.

Zur Lösung der ersten oben gegebenen Aufgabe besteht die ringförmige Innen- und Aussenschale einer Ringbrennkammer aus rotationssymmetrisch hergestelltem Blech. Diese sind in der Trennebene der Gasturbine zur Montage aufgeschnitten und im eingebauten Zustand in der Trennebene mit mindestens einer Trennebenenschweissnaht verschweisst. Die Verwendung einer Schweissnaht hat den Vorteil, dass die Schalen aus Blech ohne Verstärkungen und den damit verbundenen Inhomogenitäten in der Wärmekapazität der verschiedenen Schalenbereiche gefertigt werden kann. Insbesondere werden damit Verzug und Spannungen im Bereich von Flanschen vermieden. Durch die Vermeidung von Flanschen kann die gesamte Schale aus relativ dünnem Blech gefertigt werden und damit der Materialverbrauch reduziert werden. Da die Brennkammerschalen thermisch hochbelastete Bauteile aus teuren Materialen sind, wird durch diese Reduktion wesentliche Kosten eingespart. Ferner ist es schwierig Flanschverbindungen im Heissgasbereich zuverlässig abzudichten. Unkontrollierte Leckagen im Brennkammerbereich führen zu Leistungs- und Wirkungsgradeinbussen. Darüber hinaus können sie aber vor allem die Verbrennung negativ beeinflussen. Insbesondere können sie zu Pulsationen und signifikant erhöhten Emissionen führen. Dies sind primär erhöhte CO und UHC (unburned hydrocarbon) Emissionen, die durch "Quenchen" d.h. lokales Kühlen der Flamme entsehen. Sekundär kann es aber auch zu einer Erhöhung der NOx Emissionen kommen, da mit der lokalen Temperaturreduktion durch Leckagen bei unveränderter durchschnittlicher Brennkammeraustrittstemperatur eine Erhöhung der lokalen Temperaturmaxima einhergehen, die zu erhöhten NOx Emission führen. Die vorgeschlagene Lösung mit Schweissnaht lösst das Dichtungsproblem und verhindert damit unkontrollierte Leckagen.

Um die Lebensdauer der mindestens einen Trennebenenschweissnaht sicher zu stellen, wird eine Filmkühlung der Trennebenenschweissnaht vorgeschlagen. Zur Realisierung der Filmkühlung wird das Schalenblech entlang der Trennebenenschweissnaht mit Kühlluftlöchern versehen. Diese können auf einer oder beiden Seiten der Schweissnaht vorgesehen werden. Sie können durch geeignete Verfahren wie z.B. EDM (Electrical Discharge Machining), bohren, ätzen oder mit Laser appliziert sein.

Um die Effektivität der Filmkühlung zu erhöhen, sind die Schalen im Bereich der Trennebenenschweissnaht mit einer von der Heissgasseite wegweisenden, zur Kühlluftseite hinweisenden Einbuchtung versehen. Die Trennebenenschweissnaht ist am Grund der Einbuchtung ausgeführt und die Löcher zur Filmkühlung sind beispielsweise an den Seitenwänden der Einbuchtung ausgeführt. Als Einbuchtung ist in der einfachsten Ausführung als eine Folge von drei Biegungen im Blech zu verstehen. Die erste und dritte Biegung weist von der ringförmigen Oberfläche der Innen- oder Aussenschale von den Heissgasen weg. Die zweite Biegung ist entgegengesetzt zur ersten und dritten gerichtet. Sie verbindet die beiden, von den Heissgasen wegweisen, Enden der ersten und dritten Biegung in einem Bogen. Die Mitte dieses verbindenden Bogens ist der am weitesten von den Heissgasen entfernte Bereich der Einbuchtung. Sie wird im weitern als Grund der Einbuchtung bezeichnet.

Damit die Filmkühlung möglichst wenig von der Hauptströmung beeinflusst wird, kann die Einbuchtung parallel zur Hauptströmung ausgeführt sein. Dies wird sich in der Regel dann ergeben, wenn die Einbuchtung in der Trennebene und parallel zu dieser ausgeführt ist.

Zur Verbesserung der Hitzebeständigkeit sind die Schalen jeweils auf der den Heissgasen zugewandten Seite mit einer Wärmeschutzschicht beschichtet.

Diese ringförmigen Schalen können durch plastische Verformung, beispielsweise in einem Rotationsverfahren (Spinning) oder durch Explosionsformung, in die gewünschte Form gebracht werden. Um die Formstabilität, insbesondere auch für die weitere Bearbeitung zu verbessern, können die Schalen vor dem Teilen in eine obere und eine untere Halbschale, spannungsfrei geglüht werden.

Zum Einbau oder Austausch werden die Schalen in einer Trennebene aufgeschnitten und die untere Hälfte der Innen- wie der Aussenschale in die untere Gehäusehälfte einer Gasturbine eingeführt. Nach Einsetzen des Rotors, der Wellenabdeckung usw. können die beiden oberen Schalenhälften ebenfalls eingesetzt werden und durch verschweissen mit den unteren Hälften verbunden werden. Nach verschweissen der Schalenhälften sind wieder ringförmige Schalen erstellt, die frei von Flanschen oder anderen Verdickungen sind, die zu thermischem Verzug führen können.

Auf der den heissen Brenngasen abgewandten Seite werden Innen- und Aussenschale mit Kühlluft oder einem anderen geeigneten Medium gekühlt. Um eine effektive Kühlung zu gewährleisten wird das Kühlmedium beispielsweise in einer Kühlluftführungshülle an der Oberfläche der Schale entlang geführt. Eine Kühlluftführungshülle ist eine Blechkonstruktion die durch Abstandshalter in einem definierten Abstand von dem Schalenblech gehalten wird und unter dem das Kühlmedium entlang strömt. Durch die Befestigung an der Schale wird gewährleistet, dass der Abstand zwischen Kühlluftführungshülle und Schale auch bei thermischen Dehnungen der Schale konstant bleibt.

Der Abstand zwischen Kühlluftführungshülle und Schale kann dabei örtlich variieren. In Regionen, die eine hohe Kühlleistung beanspruchen, kann der Abstand reduziert sein, um die Strömungsgeschwindigkeit, und damit die Wärmeübertragung zu erhöhen. Weiter kann die Kühlluftseite der Schalen zur Erhöhung der Wärmeübertragung mit Turbulenzrippen versehen sein.

Eine weitere Möglichkeit die Temperatur der Schweissnaht zu reduzieren, ist sie lokal mit einer Prallkühlung zu versehen. Dies kann in Kombination mit oben beschriebenen Massnahmen möglich. Durch die Prallkühlung wird die Wärmeübertragung erhöht und damit der Temperaturgradient im Material erhöht, was die zyklische Lebensdauer beeinträchtigen kann. Je nach Belastung des Bauteils kann eine Prallkühlung daher nur in Kombination mit Filmkühlung oder lokal angewandt werden. In manchen Fällen ist von einer Prallkühlung ganz abzusehen.

Prinzipiell ist das Schalenblech plastisch verformbar, so dass eine Einbuchtung durch Pressen, Formziehen oder einen anderen geeigneten Prozess vor Auftrennen und Teilen der ursprünglich ringförmigen Innen- bzw. Aussenschalen in zwei Halbschalen möglich ist. Weiter ist ein Aufbiegen der Halbschalenränder nach der Trennung in zwei Halbschalen möglich. Die plastische Verformung der Schalenbleche ist aufgrund der Baugrösse der Teile aufwendig und kann zu einem Verzug der Teile führen.

Als alternative Lösung, bei der die plasitsche Verformung ganzer Schalen oder Halbschalen vermieden ist, wird erfindungsgemäss eine Ausführung mit mindestens einem Trennebenenelement vorgeschlagen. In dieser Ausführung ist im Trennebenenbereich ein länglicher Blechstreifen aus der ringförmigen Innen- und/ oder Aussenschale ausgeschnitten und ein Trennebenenelement in die entstehende Lücke eingepasst und eingeschweisst.

Trennebenenelemente sind Blechstreifen, die der Kontur der Schalen in der Trennebene folgen und die ausserdem mit einer geeigneten Einbuchtung für eine Schweissnaht und die Führung der Filmkühlung versehen sind. Diese werden aus Blech durch plastische Verformung, beispielsweise durch Pressen hergestellt. An mindestens einer Seitenwand der Einbuchtungen sind Löcher für die Filmkühlung vorzusehen. Diese können durch geeignete Verfahren wie z.B. EDM (Electrical Discharge Machining), bohren, ätzen oder mit Laser appliziert werden.

Der Kühlfilm, bzw. die Kühlluftlöcher und Kühlluftversorgung, kann mit seiner Wirkung auf die Materialtemperatur so gesteuert werden, dass die Lebensdauer der Schale optimiert wird.

Zum Einsetzen der Trennebenenelemente werden aus den Schalen im Bereich der Trennebene entsprechend grosse Streifen ausgeschnitten, die Trennebenenelemente angepasst und eingeschweisst. Das Einsetzen des Trennebenenelements erfolgt in einem Werk beziehungsweise einer Werkstatt. Entsprechend sind die Schweissnähte zum Einsetzen des Trennebenenelements gut zugänglich und können, falls erforderlich, von beiden Seiten geschweisst werden. Vor allem sind die Schweissnähte für eine Beschichtung mit einer Wärmeschutzschicht zugänglich. Die Beschichtung wird beispielsweise für die gesamte Schale erst nach dem Einfügen des Trennebenenelements durchgeführt.

Bei Anwendung eines Trennebenenelements kann dessen Blechdicke gleich der Blechdicke des übrigen Schalenbleches gewählt werden. Eine unterschiedliche Blechdicke kann aber Vorteilhaft sein. Beispielsweise kann die Blechdicke des Trennebenenelements grösser als die des Schalenbleches gewählt werden, um die mechanische Stabilität des Trennebenenelements trotz Kühlluftbohrungen zu gewährleisten. Andererseits kann das Trennebenenelement mit einer kleineren Blechdicke ausgeführt werde, um einen Verzug der Schalen durch die versteifende Wirkung der Einbuchtung des Trennebenenelements zu vermeiden.

Bei der Verwendung eines Trennebenenelements eröffnen sich verschiedene weitere Möglichkeiten dieses Kühlungstechnisch zu optimieren. Beispielsweise kann die Einbuchtung mit der Form eines Schwalbenschwanzes vorgesehen werden, so dass die zur Heissgasseite offene Fläche verkleinert wird und der Kühlluftbedarf für die Filmkühlung reduziert wird. Fertigungstechnisch kann es in diesem Fall einfacher sein, das Trennebenenelement aus zwei Teilen herzustellen, die im Grund des Schwalbenschwanzes, der später als Trennebene dient, verschweisst werden.

Aufgrund der Strömungsverhältnisse und Temperaturverteilung auf der Heissgasseite ist es möglich, dass nur ein Teil der Trennebene und insbesondere nur ein Teil der Schweissnaht zum Schliessen der Trennebene lebensdauerkritisch ist. In diesem Fall kann die Anwendung der oben beschriebenen Massnahmen zur Lebensdauerverbesserung der Schweissnaht, insbesondere das Einfügen eines Trennebenenelements, auf den kritischen Bereich der Trennebene beschränkt werden.

Der Einbau oder Austausch von Innen- und/ oder Aussenschalen mit Trennebenelementen erfolgt analog zu dem bereits erläuterten Verfahren für Innen- und/ oder Aussenschalen ohne Trennebenelemente. Dass heisst, die Innen- und/oder Aussenschale werden für den Einbau oder Austausch in einer Trennebene aufgeschnitten und die jeweils untere Hälfte in die untere Gehäusehälfte einer Gasturbine eingeführt. Nach Einsetzen des Rotors, der Wellenabdeckung usw. können die oberen Schalenhälften ebenfalls eingesetzt werden und durch verschweissen mit den unteren Hälften verbunden werden.

Damit die Trennebenenelemente nicht nur für einen ersten Einbau geeignet sind, kann es Vorteilhaft sein, diese mit seitlichem Übermass zu fertigen und sie beim Einpassen in die Schale entsprechend zuzuschneiden. Insbesondere können bei der Verwendung von Trennebenenelementen mit Übermass bei jedem Austausch die bestehenden Schweissnähte, die in der Regel schlechtere Materialeigenschaften als das Grundmaterial aufweisst, weggeschnitten werden. Damit wird die Breite des länglichen ausgeschnittenen Blechstreifens bei jedem Austausch grösser und es wird bei jedem Austausch weniger Restmaterial von dem auf Übermass gefertigten Trennebenenelement abgeschnitten.

Ein weiterer Vorteil der Lösung ist, dass die Trennebenenelemente auch in exsistierende Schalen als Reparaturlösung eingebaut werden können. Mit ihnen wird sichergestellt, dass nach einer Rekonditionierung (Überholung) bei Wiedereinbau von Brennkammerschalen die Lebensdauer auch im Bereich der Trennebenenschweissnaht erreicht werden kann.

Neben einer Gasturbine mit ringförmigen Schalen und einem geschweissten Verschluss ist ein Verfahren zum Öffnen und Schliessen der Schalen Gegenstand der Erfindung.

### Kurze Beschreibung der Zeichnungen

Die Erfindung ist anhand von Ausführungsbeispielen in den Fig. 1 bis 7 dargestellt.

Es zeigen:
Fig. 1 Schnitt durch die Mittelpartie einer Gasturbine mit Ringbrennkammer.
Fig. 2 Schnitt durch die Ringbrennkammer einer Gasturbine mit Innen- und Aussenschale sowie Kühlluftführungshüllen zur Führung der Schalenkühlluft.
Fig. 3 Seitenansicht einer Brennkammerschale mit Trennebenenelement.
Fig. 4 Räumliche Darstellung eines Trennebenenelements mit Übermass an den Seiten.
Fig. 5a Schnitt V-V durch ein in eine Schale eingeschweisstes Trennebenenelement, das nicht Teil der Erfindung ist.
Fig. 5b Schnitt V-V durch ein in eine Schale eingeschweisstes Trennebenenelement mit Trennebenenschweissnaht nach dem Einbau in eine Gasturbine.
Fig. 5c Schnitt V-V durch ein Trennebenenelement in der Form eines Schwalbenschwanzes.

### Ausführung der Erfindung

Eine Gasturbine mit einer Vorrichtung zur Durchführung des erfindungsgemässen Verfahrens weist im wesentlichen mindestens einen Verdichter, mindestens eine Brennkammer und mindestens eine Turbine auf, die über mindestens eine Welle den Verdichter und einen Generator antreibt.

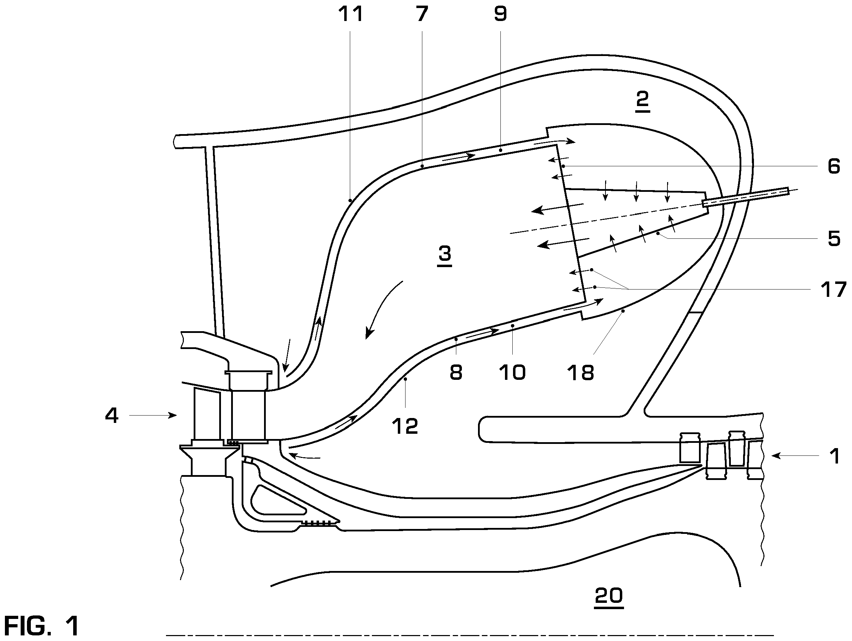

Fig. 1 zeigt einen Schnitt durch die Mittelpartie einer Gasturbine, das heisst den Bereich zwischen Kompressor und Turbine sowie die Endstufe des Kompressors und die erste Stufe der Turbine.

Der Verdichter 1 verdichtet die Luft. Der grösste Teil der Luft wird über das Kompressorplenum 2 in eine Ringbrennkammer 3 eingeleitet und mit Brennstoff vermischt, der dort verbrennt. Von dort strömen die heissen Brenngase unter Arbeitsabgabe durch eine Turbine 4 ab. Die Ringbrennkammer wird von einer Aussenschale 7, einer Innenschale 8 und einer Frontplatte 6, durch die über Brenner 5 der mit Kompressorendluft vorgemischte Brennstoff eingeleitet wird, umschlossen. Ein Teil der Kompressorendluft wird vor der Einleitung in die Ringbrennkammer an der Innenschale 8 und Aussenschale 7 zur Kühlung entlanggeleitet. Zur Führung der Kühlluft wird um die Brennkammerschalen eine äussere Kühlluftführungshülle 11 und eine innere Kühlluftführungshülle 12 vorgesehen. Um eine Druckdifferenz zu erzeugen, die die Kühlluft zwischen Kühlluftführungshülle und Brennkammerschale entlang strömen lässt, ist am Austritt der Kühlluftführungshülle eine Brennerhaube 18 angeordnet, in der ein unter dem Kompressorplenumdruck liegender Druck herrscht. Von dieser fliesst die Luft über die Brenner 5 oder als Frontplattenkühlluft 17 in die Ringbrennkammer 3. Der Druckverlust zwischen Kompressorplenum 2 und Ringbrennkammer 3 wird damit in einen Teil zur Brennschalenkühlung und einen Teil zur Frontplattenkühlung bzw. Zumischung in die Brenner 5 aufgeteilt.

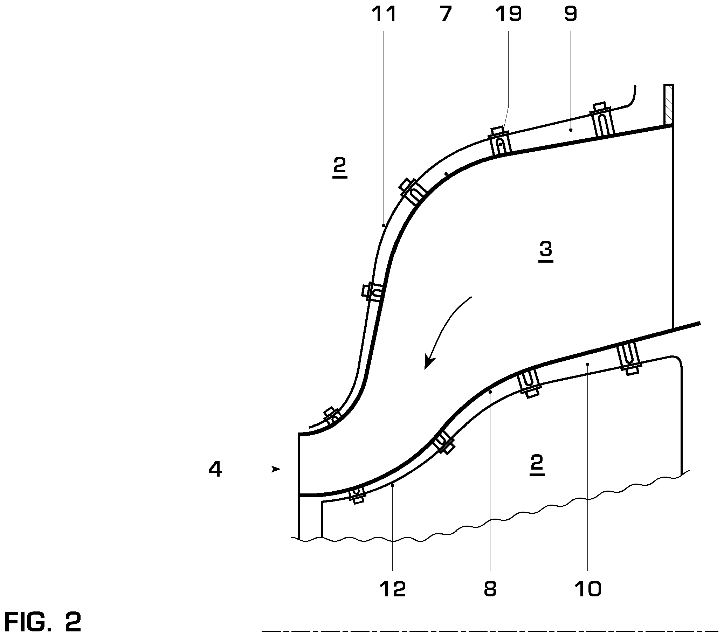

Die Fig. 2 zeigt einen Schnitt durch die Ringbrennkammer 3 einer Gasturbine mit Innen- 8 und Aussenschale 7 sowie Kühlluftführungshüllen 11, 12 zur Führung der Schalenkühlluft. Weiter sind die Befestigungselemente 19, durch die die innere Kühlluftführungshülle 12 mit der Innenschale 8 und die äussere Kühlluftführungshülle 11 mit Aussenschale 7 verbunden sind, dargestellt. Brenner und Frontplatte sind hier nicht gezeigt.

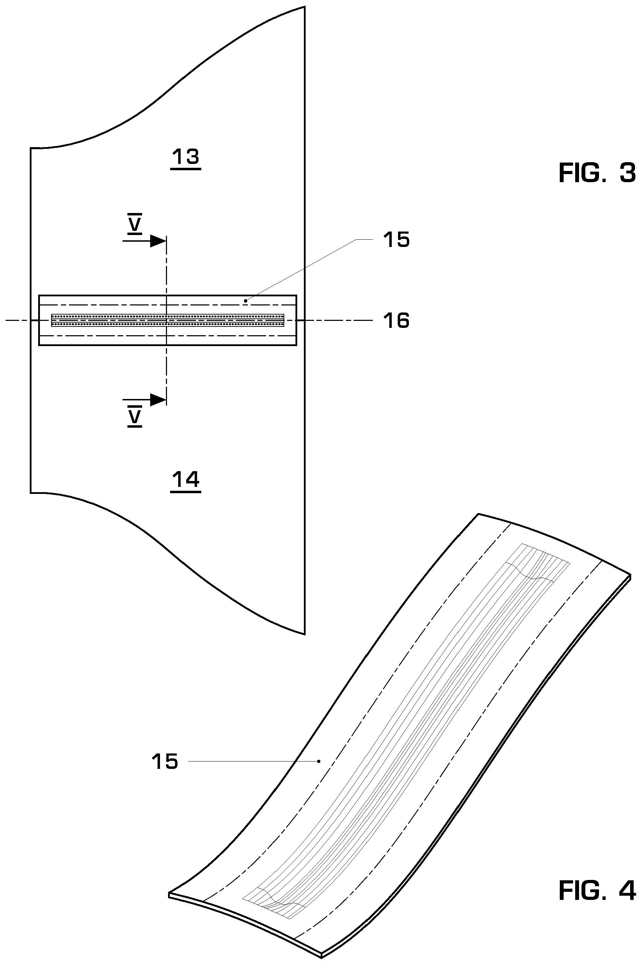

In Fig. 3 ist die Seitenansicht einer ringförmigen Brennkammerschale mit eingeschweisstem Trennebenenelement 15 gezeigt. Bei der beispielhaft dargestellten Brennkammerschale kann es sich sowohl um eine Innenschale 8 als auch um eine Aussenschale 7 handeln. Die Brennkammerschale wird in einem Rotationsverfahren symmetrisch aus Blech geformt. Anschliessend wird in der Trennebene 16 ein Blechstreifen herausgeschnitten, wodurch die Schale in eine obere und eine untere Hälfte 13, 14 getrennt werden kann. Die obere und untere Hälfte 13, 14 kann aber auch an den Endbereichen, wie in Fig. 3 dargestellt auch noch verbunden beleiben und nur in dem mittleren Bereich eine im wesentlichen rechteckige Öffnung ausgeschnitten werden. In diese Öffnung wird ein Trennebenenelement 15 eingepasst und eingeschweisst. Ein derartiges Trennebenenelement 15 ist in Fig. 4 räumlich dargestellt. Diese Elemente werden beispielsweise mit Übermass hergestellt und dann beim Einpassen auf die erforderliche Grösse zugeschnitten. Sie werden aus Blech durch plastische Verformung, beispielsweise durch Pressen hergestellt. Zur Verbesserung der Hitzebeständigkeit wird auf der dem Heissgas zugewandten Seite eine Wärmeschutzschicht aufgetragen. Dies kann beispielsweise ein Zirkonoxid mit zugehöriger Haftschicht (Bond Coat) sein.

Zur Montage werden die Schalen in einer Trennebene aufgeschnitten und die untere Hälfte der Innen- wie der Aussenschale in die untere Gehäusehälfte einer Gasturbine eingeführt. Nach Einsetzen des Rotors, der Wellenabdeckung usw. können die beiden oberen Schalenhälften ebenfalls eingesetzt werden und durch verschweissen mit den unteren Hälften verbunden werden. Dabei entsehen wieder ringförmige Schalen.

Die an mindestens einer Seitenwand der Einbuchtungen für die Filmkühlung vorgesehen Löcher können durch geeignete Verfahren wie z.B. EDM (Electrical Discharge Machining), bohren, ätzen oder mit Laser appliziert sein.

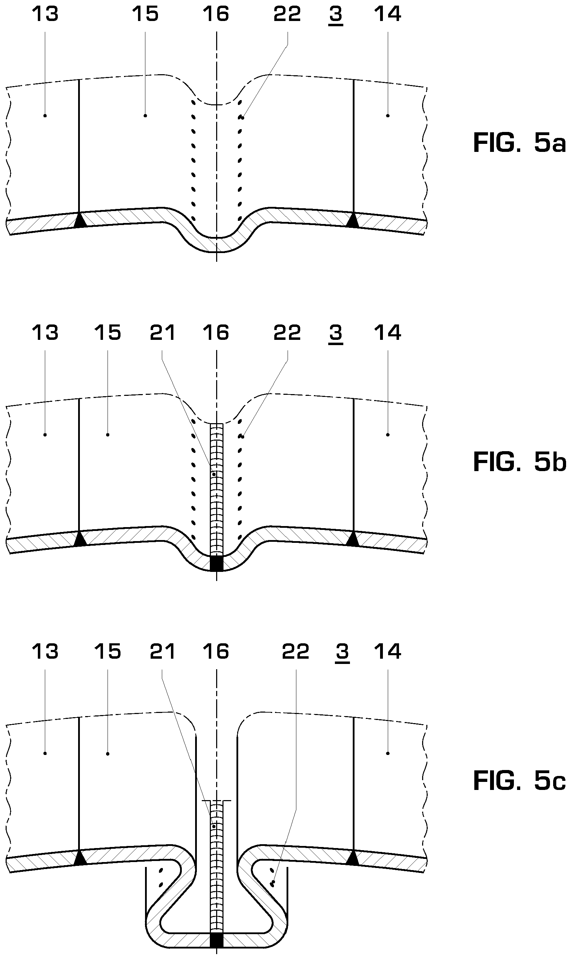

Eine Ausführung mit zwei Reihen von Kühlluftlöchern 22 beidseitig der Trennebene 16 ist in dem Schnitt V-V in Fig. 5a für ein in eine Schale eingeschweisstes Trennebenenelement 15 vor dem Einbau in eine Gasturbine gezeigt. Die Einbuchtung ist von den Heissgasen, dass heist von der Ringbrennkammer 3 wegweisend. Die Trennebene 16 befindet sich im Gund der Einbuchtung.

Das selbe Trennebenenelement 15 ist in Fig. 5b mit einer
erfindungsgemässen Trennebenschweissnaht 21 nach dem Einbau in eine Gasturbine gezeigt. Die Trennebenschweissnaht 21 ist in der Trennebene 16 im Grund der Einbuchtung ausgeführt.

Fig. 5c zeigt ein Beispiel eines Trennebenenelements, das in der Form eines Schwalbenschwanzes ausgeführt ist. Die Schweissnaht ist auch hier beispielsweise in der Trennebene 16 im Grund der Einbuchtung ausgeführt. Dabei hier als Grund der Einbuchtung nicht die Mitte eines Bogens, sondern allgemeiner, der den Heissgasen am weitesten abgewandte Bereich der Einbuchtung zu verstehen. In dem dargestellten Beispiel sind die Kühlluftlöcher 22 in zwei Reihen in den Seitenwänden des Schwalbenschwanzes so angeordnet, dass die Kühlluft auf die Trennebenenschweissnaht 16 gerichtet ist. Die Kühlluftlöcher 22 können aber auch in einer Reihe parallel zur Trennebenenschweissnaht 16 angeordnet sein.

Selbstverständlich ist die Erfindung nicht auf die hier gezeigten und beschriebenen Ausführungen beschränkt. Alle erläuterten Vorteile sind nicht nur in den jeweils angegebenen Kombinationen, sondern auch in anderen Kombinationen oder Alleinstellung verwendbar, ohne den Rahmen der Erfindung zu verlassen. Beispielsweise ist es möglich, dass die linnenschale einer Brennkammer erfindungsgemäss ausgeführt ist und die Aussenschale der selben Brennkammer mit einem Flansch ausgfürht ist.

### Bezugszeichenliste

- 1: Verdichter (nur die zwei letzten Stufen dargestellt)
- 2: Kompressorplenum
- 3: Ringbrennkammer
- 4: Turbine (nur die erste Stufe dargestellt)
- 5: Brenner
- 6: Frontplatte
- 7: Aussenschale
- 8: Innenschale
- 9: Äusserer Kühlkanal
- 10: Innerer Kühlkanal
- 11: Äussere Kühlluftführungshülle
- 12: Innere Kühlluftführungshülle
- 13: Obere Schalenhälfte der Innen- oder Aussenschale
- 14: Untere Schalenhälfte der Innen- oder Aussenschale
- 15: Trennebenenelement
- 16: Trennebene
- 17: Frontplattenkühlluft
- 18: Brennerhaube
- 19: Befestigungselemente
- 20: Welle
- 21: Trennebenschweissnaht
- 22: Kühlluftlöcher

## Patentansprüche

1. Gasturbine mit mindestens einer Ringbrennkammer (3), die aus jeweils einer ringförmigen Innen- und Aussenschale (8, 7) gebildet ist und jeweils eine Trennebene (16) in der Innen- und Aussenschale (8, 7) aufweist, die die Schale (8, 7) in eine obere und eine untere Halbschale teilt, wobei jeweils die Innen- und/ oder Aussenschale (8, 7) der mindestens einen Ringbrennkammer (3) in der Trennebene (16) durch mindestens eine Trennebenenschweissnaht (21) geschlossen ist, **dadurch gekennzeichnet, dass** im Bereich der Trennebenenschweissnaht eine von der Heissgasseite der Ringbrennkammer (3) wegweisende Einbuchtung angeordnet ist und die Trennebenenschweissnaht am Grund der Einbuchtung angeordnet ist, wobei diese mindestens eine Trennebenenschweissnaht (21) oder ein Teil dieser Trennebenenschweissnaht (21) filmgekühlt ist und die Löcher zur Filmkühlung an den Seitenwänden der Einbuchtung angeordnet sind.

2. Gasturbine nach Anspruch 1, **dadurch gekennzeichnet, dass** die Einbuchtung parallel zur Hauptströmung der Ringbrennkammer ausgerichtet ist.

3. Gasturbine nach einem der vorstehenden Ansprüche, **dadurch gekennzeichnet, dass** auf die Heissgasseite der mindestens einen Innen- oder Aussenschale eine Wärmeschutzschicht aufgetragen ist.

4. Gasturbine nach einem der vorstehenden Ansprüche, **dadurch gekennzeichnet, dass** zur Kühlung der Trennebenenschweissnaht (16) die Kühlungsseite der Ringbrennkammer (3) im Bereich der Trennebenenschweissnaht (16) mit Turbulenzrippen ausgeführt ist.

5. Gasturbine nach einem der vorstehenden Ansprüche, **dadurch gekennzeichnet, dass** eine Prallluftkühlung für die Kühlung der mindestens einen Trennebenenschweissnaht (21) vorgesehen ist oder eine Prallluftkühlung zur Unterstützung der Kühlung der mindestens einen Trennebenenschweissnaht (21) vorgesehen ist.

6. Gasturbine nach einem der vorstehenden Ansprüche, **dadurch gekennzeichnet, dass** ein Trennebenenelement (15) mit einer von der Heissgasseite der Ringbrennkammer (3) wegweisenden Einbuchtung, welche den Kühlluftfilm entlang der Trennebenenschweissnaht (21) führt, im Bereich der Trennebene (16) in mindestens eine Innen- und/ oder Aussenschale (8, 7), eingeschweisst ist.

7. Gasturbine nach Anspruch 6, **dadurch gekennzeichnet, dass** das Trennebenenelement (15) mit einer Wandstärke ausgeführt ist, die unterschiedlich von der der Innen- und/ oder Aussenschale (8, 7) ist.

8. Gasturbine nach Ansprch 6 oder 7, **dadurch gekennzeichnet, dass** die Einbuchtung in Form eines Schwalbenschwanzes ausgeführt ist.

9. Verfahren zum Einbau oder Austausch einer Innen- und/ oder Aussenschale (8, 7) einer Gasturbine mit mindestens einer Ringbrennkammer (3), die aus einer ringförmigen Innen- und Aussenschale (8, 7) gebildet ist, und jeweils eine Trennebene (16) in Innen- und/ oder Aussenschale (8, 7) aufweist, die die Schale (8, 7) in eine obere und eine untere Halbschale teilt, **dadurch gekennzeichnet, dass** eine von der Heissgasseite der Ringbrennkammer (3) wegweisende Einbuchtung angeordnet ist, wobei Löcher zur Filmkühlung an den Seitenwänden der Einbuchtung angeordnet sind, und die Innen- und/ oder Aussenschale (8, 7) am Grund der Einbuchtung aufgeschnitten wird und nach dem Einbau oder Austausch am Grund der Einbuchtung durch eine mindestens teilweise filmgekühlteTrennebenenschweissnaht (21) geschlossen wird.

10. Verfahren nach Anspruch 9, **dadurch gekennzeichnet, dass** vor dem Einbau oder Austausch einer Innen- und/ oder Aussenschale (8, 7) ein länglicher Blechstreifen aus der ringförmigen Innen- und/ oder Aussenschale (8, 7) ausgeschnitten wird, und dass mindestens ein Trennebenenelement (15) in die entstehende Lücke eingepasst und eingeschweisst wird.

11. Verfahren nach Anspruch 10, **dadurch gekennzeichnet, dass** ein mit Übermass gefertigtes Trennebenenelement (15) beim Einpassen in die Innen- und/ oder Aussenschale (8, 7) passend zugeschnitten wird.

12. Verfahren nach Anspruch 10 oder 11, **dadurch gekennzeichnet, dass** bei jedem Austausch eines Trennebenenelementes (15) die bestehenden Schweissnähte, die das Trennebenenelement (15) mit der Innen- und/ oder Aussenschale (8, 7) verbinden, mit weggeschnitten werden, damit die Breite des länglichen ausgeschnittenen Blechstreifens bei jedem Austausch grösser wird und bei jedem Austausch weniger Restmaterial von dem auf Übermass gefertigten Trennebenenelement (15) abgeschnitten wird.

13. Verfahren nach einem der Ansprüche 10 bis 12, **dadurch gekennzeichnet, dass** auf die Heissgasseite der Schweissnähte, mit denen das Trennebenenelement (15) mit der Innen- und/ oder Aussenschale (8, 7) verbunden wird, eine Wärmeschutzschicht aufgetragen wird.

14. Verfahren nach einem der Ansprüche 10 bis 13, **dadurch gekennzeichnet, dass** das Trennebenenelement (15) bei einer Reparatur oder Rekonditionierung der mindestens einen Innen- und/ oder Aussenschale (8, 7) eingebaut wird.

## Claims

1. Gas turbine with at least one annular combustion chamber (3), which is formed in each case from an ring-shaped inner shell and outer shell (8, 7) and in each case has a parting plane (16) in the inner shell and outer shell (8, 7), which divides the shell (8, 7) into an upper half shell and a lower half shell, wherein in each case the inner and/or outer shell (8, 7) of the at least one annular combustion chamber (3) is closed in the parting plane (16) by at least one parting plane weld seam (21), **characterised in that** an indentation pointing away from the hot gas side of the annular combustion chamber (3) is arranged in the region of the parting plane weld seam and the parting plane weld seam is arranged on the base of the indentation, wherein this at least one parting plane weld seam (21) or a part of this parting plane weld seam (21) is film-cooled and the holes for the film cooling are arranged on the side walls of the indentation.

2. Gas turbine according to claim 1, **characterised in that** the indentation is aligned parallel to the main flow direction of the annular combustion chamber.

3. Gas turbine according to any of the preceding claims, **characterised in that** a thermal protection layer is applied to the hot gas side of the at least one inner or outer shell.

4. Gas turbine according to any of the preceding claims, **characterised in that** in order to cool the parting plane weld seam (16) the cooling side of the annular combustion chamber (3) is provided with turbulence ribs in the region of the parting plane weld seam (16).

5. Gas turbine according to any of the preceding claims, **characterised in that** an impact air cooling is provided for the cooling of the at least one parting plane weld seam (21) or an impact air cooling is provided in order to assist the cooling of the at least one parting plane weld seam (21).

6. Gas turbine according to any of the preceding claims, **characterised in that** a parting plane element (15) with an indentation pointing away from the hot gas side of the annular combustion chamber (3) that leads the cooling air film along the parting plane weld seam (21), is welded in the region of the parting plane (16) into at least one inner and/or outer shell (8, 7).

7. Gas turbine according to claim 6, **characterised in that** the parting plane element (15) is designed having a wall thickness that is different from the wall thickness of the inner and/or outer shell (8, 7).

8. Gas turbine according to claim 6 or 7, **characterised in that** the indentation is designed in the form of a dovetail.

9. Method for the installation or replacement of an inner and/or outer shell (8, 7) of a gas turbine with at least one annular combustion chamber (3) that is formed from a ring-shaped inner and outer shell (8, 7), and respectively comprises a parting plane (16) in the inner and/or outer shell (8, 7) that divides the shell (8, 7) into an upper half shell and a lower half shell, **characterised in that** an indentation is arranged pointing away from the hot gas side of the annular combustion chamber (3), wherein holes for the film cooling are arranged on the side walls of the indentation, and the inner and/or outer shell (8, 7) is cut open at the base of the indentation, and after the installation or replacement at the base of the indentation is closed by at least one partially film-cooled parting plane weld seam (21).

10. Method according to claim 9, **characterised in that** before the installation or replacement of an inner and/or an outer shell (8, 7) a longitudinal sheet metal strip is cut out from the ring-shaped inner and/or outer shell (8, 7), and that at least one parting plane element (15) is fitted and welded into the resulting gap.

11. Method according to claim 10, **characterised in that** an oversized parting plane element (15) is cut to size when it is fitted into the inner and/or outer shell (8, 7).

12. Method according to claim 10 or 11, **characterised in that** with each replacement of a parting plane element (15) the existing weld seams that join the parting plane element (15) to the inner and/or outer shell (8, 7) are cut away so that the width of the longitudinally cut-out sheet metal strip is larger with each replacement and with each replacement less residual material is cut off from the oversized parting plane element (15).

13. Method according to any of claims 10 to 12, **characterised in that** a heat insulation layer is applied to the hot gas side of the weld seams with which the parting plane element (15) is joined to the inner and/or outer shell (8, 7).

14. Method according to any of claims 10 to 13, **characterised in that** the parting plane element (15) is installed during a repair or reconditioning of the at least one inner and/or outer shell (8, 7).

## Revendications

1. Turbine à gaz comprenant au moins une chambre de combustion annulaire (3) qui est formée respectivement d'une coque interne et d'une coque externe annulaires (8, 7) et présente respectivement un plan de séparation (16) dans la coque interne et la coque externe (8, 7), qui partage les coques (8, 7) en une demi-coque supérieure et une demi-coque inférieure, dans laquelle, respectivement, les coques interne et/ou externe (8, 7) de la au moins une chambre de combustion annulaire (3) est ou sont fermées dans le plan de séparation (16) par au moins un cordon de soudure de plan de séparation (21), **caractérisée en ce qu'**une rainure indiquant le côté de gaz chauds de la chambre de combustion annulaire (3) est ménagée dans la zone du cordon de soudure du plan de séparation et le cordon de soudure du plan de séparation est agencé au fond de la rainure, dans laquelle ce au moins un cordon de soudure de plan de séparation (21) ou une partie de ce cordon de soudure de plan de séparation (21) est refroidi(e) par film et les trous destinés au refroidissement par film sont ménagés sur les parois latérales de la rainure.

2. Turbine à gaz selon la revendication 1, **caractérisée en ce que** la rainure est orientée parallèlement au courant principal de la chambre de combustion annulaire.

3. Turbine à gaz selon l'une quelconque des revendications précédentes, **caractérisée en ce qu'**une couche calorifuge est appliquée sur le côté de gaz chauds de la au moins une coque interne ou une coque externe.

4. Turbine à gaz selon l'une quelconque des revendications précédentes, **caractérisée en ce que**, pour refroidir le cordon de soudure (16) du plan de séparation, le côté de refroidissement de la chambre de combustion annulaire (3) est pourvu de nervures de turbulence dans la zone du cordon de soudure (16) du plan de séparation.

5. Turbine à gaz selon l'une quelconque des revendications précédentes, **caractérisée en ce qu'**il est prévu un refroidissement d'air par impact pour le refroidissement du au moins un cordon de soudure (21) du plan de séparation ou il est prévu un refroidissement d'air par impact pour soutenir le refroidissement du au moins un cordon de soudure (21) du plan de séparation.

6. Turbine à gaz selon l'une quelconque des revendications précédentes, **caractérisée en ce qu'**un élément de plan de séparation (15) pourvu d'une rainure indiquant le côté de gaz chauds de la chambre de combustion annulaire (3), qui guide le film d'air de refroidissement le long du cordon de soudure (21) du plan de séparation, est soudé dans la zone du plan de séparation (16) sur au moins une coque interne et/ou une coque externe (8, 7).

7. Turbine à gaz selon la revendication 6, **caractérisée en ce que** l'élément de plan de séparation (15) est conçu avec une épaisseur de paroi qui est différente de celle de la coque interne et/ou de la coque externe (8, 7).

8. Turbine à gaz selon la revendication 6 ou 7, **caractérisée en ce que** la rainure se présente sous la forme d'une queue d'aronde.

9. Procédé de montage ou d'échange d'une coque interne et/ou d'une coque externe (8, 7) d'une turbine à gaz comprenant au moins une chambre de combustion annulaire (3), qui est formée d'une coque interne et d'une coque externe annulaires (8, 7), et présente respectivement un plan de séparation (16) dans la coque interne et/ou la coque externe (8, 7), qui partage la coque (8, 7) en une demi-coque supérieure et une demi-coque inférieure, **caractérisé en ce que** l'on agence une rainure indiquant le côté de gaz chauds de la chambre de combustion annulaire (3), dans lequel des trous pour le refroidissement par film sont ménagés sur les parois latérales de la rainure et la coque interne et/ou la coque externe (8, 7) est ou sont découpées au fond de la rainure et sont fermées après le montage ou l'échange au fond de la rainure par un cordon de soudure de plan de séparation (21) au moins en partie refroidi par film.

10. Procédé selon la revendication 9, **caractérisé en ce que**, avant le montage ou l'échange d'une coque interne et/ou d'une coque externe (8, 7), une bande de tôle longitudinale est découpée dans la coque interne et/ou la coque externe annulaires (8, 7) et au moins un élément de plan de séparation (15) est emboîté et soudé dans l'espace obtenu.

11. Procédé selon la revendication 10, **caractérisé en ce qu'**un élément de plan de séparation (15) fabriqué en surmesure est coupé à dimension de manière adaptée lors de l'emboîtement dans la coque interne et/ou la coque externe (8, 7).

12. Procédé selon la revendication 10 ou 11, **caractérisé en ce que**, lors de chaque échange d'un élément de plan de séparation (15), les cordons de soudure existants, qui relient l'élément de plan de séparation (15) à la coque interne et/ou à la coque externe (8, 7), sont sectionnés de sorte que la largeur de la bande de tôle longitudinale sectionnée soit plus grande à chaque échange et que, à chaque échange, moins de matériau résiduaire de l'élément de plan de séparation fabriqué en surmesure (15) ne soit découpé.

13. Procédé selon l'une quelconque des revendications 10 à 12, **caractérisé en ce qu'**une couche calorifuge est appliquée sur le côté de gaz chauds des cordons de soudure, avec lesquels l'élément de plan de séparation (15) est relié à la coque interne et/ou à la coque externe (8,7).

14. Procédé selon l'une quelconque des revendications 10 à 13, **caractérisé en ce que** l'élément de plan de séparation (15) est installé lors d'une réparation ou d'un reconditionnement de la au moins une coque interne et/ou une coque externe (8, 7).
